# EUROPEAN PATENT APPLICATION

(11) **EP 2 999 274 A1**
(43) Date of publication of application: **23.03.2016**
(21) Application number: 14797154.3
(22) Date of filing: 17.04.2014
(51) Int. Cl.: H04W 52/02, H04W 16/32, H04W 28/16, H04W 72/04

(54) **WIRELESS BASE STATION, USER TERMINAL, AND INTERMITTENT RECEPTION METHOD**

(30) Priority: 17.05.2013 JP 2013105642
(71) Applicant: NTT DOCOMO, INC., Chiyoda-ku Tokyo 100-6150 (JP)
(72) Inventor: NAGATA, Satoshi, Tokyo 100-6150 (JP); LIU, Liu, Beijing 100190 (CN); CHEN, Lan, Beijing 100190 (CN); WANG, Lihui, Beijing 100876 (CN); LI, Yong, Beijing 100876 (CN); WANG, Wenbo, Beijing 100876 (CN)
(74) Representative: Hoffmann Eitle
(86) International application number: PCT/JP2014/060949
(87) International publication number: WO 2014/185213

(57) **Abstract**

The present invention provides a discontinuous reception method in a radio communication system in which carrier aggregation is performed by aggregating a component carrier of a macro cell and a component carrier of a small cell. The discontinuous reception method has the steps of: classifying a radio bearer configured in a user terminal into an RB group 1 including a radio bearer associated with the component carrier of the macro cell or an RB group 2 including a radio bearer associated with the component carrier of the small cell; transmitting, to the user terminal, a DRX set 1 to use in discontinuous reception of data via a radio bearer of the RB group 1 and a DRX set 2 to use in discontinuous reception of data via a radio bearer of the RB group 2.

## Description

### TECHNICAL FIELD

The present invention relates to a radio base station, a user terminal and a discontinuous reception method in next-generation mobile communication systems in which a macro cell and a small cell are located in an overlapping manner.

### BACKGROUND ART

In LTE (Long Term Evolution) or successor to LTE (for example, LTE Advanced, FRA (Future Radio Access) or 4G), there has been studied a radio communication system (for example, also called HetNet (Heterogeneous Network)) in which a small cell having a relatively small coverage area of several-meter to several-ten-meter radius (including a pico cell and a femto cell) is located within a macro cell having a relatively large coverage area of several-hundred-meter to several-km radius (for example, see Non-Patent Literature 1).

In the radio communication system where a small cell is located within a macro cell, carrier aggregation has been also considered in which one or more component carriers of the macro cell and one or more component carriers of the small cell are aggregated.

### CITATION LIST

### NON-PATENT LITERATURE

Non-Patent Literature 1: 3GPP TR 36.814 "E-UTRA Further advancements for E-UTRA physical layer aspects"

### SUMMARY OF INVENTION

### TECHNICAL PROBLEM

In the radio communication system in which carrier aggregation is performed to aggregate one or more component carriers of the macro cell and one or more component carriers of the small cell, a user terminal is connected to both of a radio base station forming the macro cell and a radio base station forming the small cell (dual connectivity), which is likely to cause a problem of increase in power consumption of the user terminal and drain battery of the user terminal immediately.

As a method for reducing power consumption of the user terminal, discontinuous reception (DRX) is known in which the user terminal switches OFF a reception circuit with a predetermined cycle. However, when the user terminal is connected to both of the radio base station forming the macro cell and the radio base station forming the small cell (dual connectivity), such conventional discontinuous reception may not work well to reduce power consumption of the user terminal sufficiently.

The preset invention was carried out in view of the foregoing and aims to provide a radio base station, a user terminal and a discontinuous reception method capable of reducing power consumption of the user terminal in a radio communication system in which carrier aggregation is performed by aggregating component carriers of a macro cell and a small cell.

### SOLUTION TO PROBLEM

The present invention provides a discontinuous reception method in a radio communication system in which carrier aggregation is performed by aggregating a component carrier of a macro cell and a component carrier of a small cell, the discontinuous reception method comprising the steps of: classifying a radio bearer configured in a user terminal into a first group or a second group, the first group including a radio bearer associated with the component carrier of the macro cell, and the second group including a radio bearer associated with the component carrier of the small cell; transmitting, to the user terminal, a first parameter set to use in discontinuous reception of data via a radio bearer of the first group and a second parameter set to use in discontinuous reception of data via a radio bearer of the second group.

### ADVANTAGEOUS EFFECTS OF INVENTION

According to the present invention, it is possible to reduce power consumption of a user terminal in a radio communication system in which carrier aggregation is performed by aggregating component carriers of a macro cell and a small cell.

### BRIEF DESCRIPTION OF DRAWINGS

Fig. 1 is a conceptual diagram of dual connectivity;
Fig. 2 is a diagram for explaining an example of discontinuous reception (DRX) control;
Fig. 3 is a diagram for explaining association between radio bearers and CCs;
Fig. 4 is a diagram for explaining DRX control when SRB and a plurality of DRBs are associated with all CCs;
Fig. 5 is a diagram for explaining association between radio bearers and CCs in a radio communication system to which C/U plane split is applied;
Fig. 6 is a diagram for explaining DRX control in a radio communication system to which C/U plane split is applied;
Fig. 7 is a diagram for explaining RB groups according to a present embodiment;
Fig. 8 is a diagram for explaining DRX sets 1 and 2 according to the present embodiment;
Fig. 9 is a diagram for explaining DRX sets 1 and 2 according to the present embodiment;
Fig. 10 is a diagram for explaining DRX control in accordance with the DRX sets 1 and 2 according to the present embodiment;
Fig. 11 is a diagram for explaining notification of the DRX sets 1 and 2 according to the present embodiment;
Fig. 12 is a diagram for explaining the effect of a discontinuous reception method according to the present embodiment;
Fig. 13 is a diagram for explaining the effect of a discontinuous reception method according to the present embodiment;
Fig. 14 is a diagram for explaining the effect of a discontinuous reception method according to the present embodiment;
Fig. 15 is a diagram schematically illustrating an example of a radio communication system according to the present embodiment;
Fig. 16 is a diagram illustrating the overall configuration of a radio base station according to the present embodiment;
Fig. 17 is a diagram illustrating the overall configuration of a user terminal according to the present embodiment;
Fig. 18 is a diagram illustrating the functional structure of a macro base station according to the present embodiment;
Fig. 19 is a diagram illustrating the functional structure of a small base station according to the present embodiment; and
Fig. 20 is a diagram illustrating the functional structure of the user terminal according to the present embodiment.

### DESCRIPTION OF EMBODIMENTS

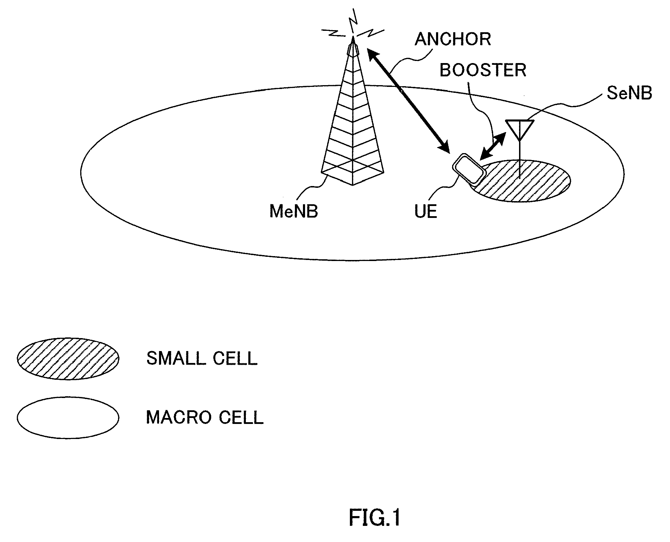

Fig. 1 is a conceptual diagram of Dual Connectivity. As illustrated in Fig. 1, in a radio communication system to which dual connectivity is applied, a user terminal (UE: User Equipment) is connected to both of a radio base station forming a macro cell (MeNB: Macro eNodeB) (hereinafter referred to as "macro base station") and a radio base station forming a small cell (SeNB: Small eNodeB) (hereinafter referred to as "small base station").

Specifically, in the radio communication system illustrated in Fig. 1, carrier aggregation (CA) is performed in which one or more component carriers (also called "Anchor Carriers") used in the macro base station (macro cell) and one or more component carriers (also called "Booster Carriers") used in the small base station (small cell) are aggregated. Here, CA is performed to achieve broadbandization by aggregating a plurality of component carriers (CCs). Each CC is, for example, a frequency band of maximum 20 MHz. For example, maximum five CCs are aggregated thereby to achieve a system band of maximum 100 MHz to allocate to the user terminal.

In the radio communication system illustrated in Fig. 1, when the macro base station and the small base station are connected to each other by a highspeed line (Ideal backhaul) such as an optical fiber, the above-mentioned CA may be called Intra-eNodeB Carrier Aggregation (CA), Intra-site Carrier Aggregation (CA) or the like. Or, when the macro base station and the small base station are connected by a low-speed line (Non-Ideal backhaul) that is slower than the optical fiber, the above-mentioned CA may be called Inter-eNodeB Carrier Aggregation (CA), Inter-site Carrier Aggregation (CA) or the like. In the following description, it is assumed that the macro base station and the small base station are connected by X2 interface that is one kind of low-speed line (Non-Ideal backhaul).

In the radio communication system illustrated in Fig. 1, the macro cell and the small cell may use the same frequency (carrier) or different frequencies (carriers). For example, the macro cell may use a relatively low frequency (carrier) F1 of 800 MHz or 2 GHz and the small cell may use a relatively high frequency (carrier) F2 of 3.5 GHz. In such a case, wide coverage is achieved by the frequency F1 of good propagation property and high throughputs are achieved by the frequency F2. In the following description, it is assumed that the macro cell uses the frequency F1 and the small cell uses the frequency F2.

Besides, in the radio communication system to which dual connectivity is applied, there has been studied C/U-plane split in which transmission of C-plane data (control data) is performed in the macro cell and transmission of U-plane data (user data) is performed in the small cell.

For example, in the radio communication system as illustrated in Fig. 1, control data such as system information (SI), RRC (Radio Resource Control) signaling, connection management and mobility is transmitted in the macro cell. In the macro cell, user data of low rate and high reliability such as VoIP (Voice over Internet Protocol) (real-time type user data of relatively short allowable delay time) is transmitted. On the other hand, in the small cell, for the purpose of data offloading, large-capacity user data such as FTP (File Transfer Protocol) and best-effort type user data of relatively long allowable delay time is transmitted.

Thus, in the C/U-plane split, the macro cell and the small cell transmit different data. Therefore, the user terminal is able to start diverse applications simultaneously. On the other hand, when the C/U-plane split is applied, there are problems of increase of power consumption of the user terminal and quick drain of battery of the user terminal.

As the technique for reducing power consumption of the user terminal, there has been presented discontinuous reception (DRX). When the user terminal is in RRC_CONNECTED (RRC connection is established between the user terminal and the radio base station), the user terminal continues to monitor downlink control channels including a PDCCH (Physical Downlink Control Channel) and an EPDCCH (Enhanced Physical Downlink Control Channel) (hereinafter referred to as "PDCCH"). Then, discontinuous reception is applied to the user terminal in RRC_CONNECTED thereby to be able to reduce power consumption of the user terminal.

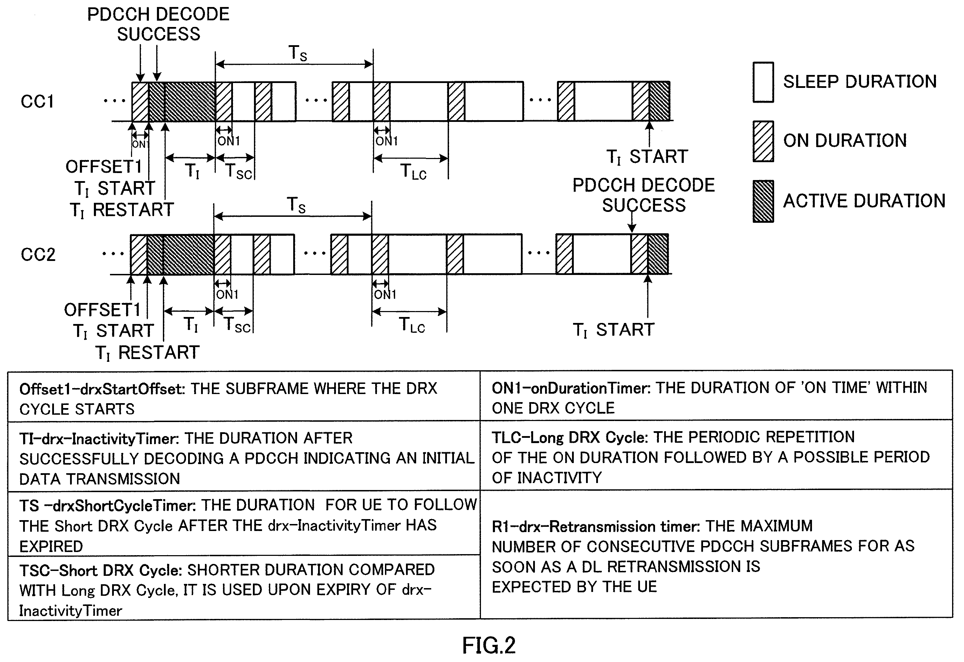

Fig. 2 is a diagram for explaining an example of discontinuous reception (DRX) control. In Fig. 2, drxStartOffset (OFFSET 1) is an offset for specifying the subframe to start the DRX cycle. The DRX cycle denotes a cycle including an ON duration and a sleep duration following the ON duration. In the ON duration, the user terminal in an active state in which the user terminal receives downlink signals such as PDCCH. On the other hand, in the sleep duration, the user terminal stops reception of downlink signals such as PDCCH. OnDurationTimer (On 1) is a timer indicating the ON duration in one DRX cycle.

In Fig. 2, when the user terminal has decoded the PDCCH for the user terminal successfully in the ON duration, it starts drx-InactivityTimer (T_{I}). The drx-InactivityTimer (T_{I}) is a timer that indicates a predetermined period after successful decoding of the PDCCH.

As illustrated in Fig. 2, before expiration of drx-InactivityTimer (T_{I}), the user terminal continues to be in the active state even after lapse of the ON duration. After expiration of the drx-InactivityTimer (T_{I}), the user terminal starts the above-mentioned DRX cycle. When the user terminal has succeeded in decoding of the PDCCH for the user terminal before expiration of the drx-InactivityTimer (T_{I}), the user terminal restarts the drx-InactivityTimer (T_{I}).

When drx-InactivityTimer (T_{I}) expires, the user terminal starts Short DRX Cycle (T_{SC}) and runs drxShortCycleTimer (T_{S}). Note that Short DRX Cycle (T_{SC}) is a relatively short DRX cycle, and drxShortCycleTimer (T_{S}) is a timer that indicates the duration in which Short DRX Cycle (T_{SC}) is repeated.

When drxShortCycleTimer (T_{S}) expires, the user terminal ends Short DRX Cycle (T_{SC}) and starts Long DRX Cycle (T_{LC}). Note that Long DRX Cycle (T_{LC}) is a DRX cycle that is longer than Short DRX Cycle (T_{SC}). In Fig. 2, when the user terminal has succeeded in decoding of PDCCH for the user terminal in the ON duration of Long DRX Cycle (T_{LC}), the user terminal runs drx-InactivityTimer (T_{I}) and repeats the above-described processing.

In addition, when carrier aggregation is performed aggregating a plurality of CCs (CC 1 and CC 2 in Fig. 2) (when the user terminal is configured with the PCell (Primary Cell) as well as at least one SCells (Secondary Cell)), the same DRX control is applied to all the CCs (all the cells).

For example, in Fig. 2, when PDCCH decoding has succeeded in the ON duration in CC 1 and thereby drx-InactivityTimer (T_{I}) is started, drx-InactivityTimer (T_{I}) is also started in CC 2. When drx-InactivityTimer (T_{I}) is started by successful decoding of PDCCH in the ON duration in CC 2, drx-InactivityTimer (T_{I}) is also started in CC 1. In this way, when carrier aggregation is applied, successful decoding of PDCCH of a part of CCs brings the other CCs into an active state.

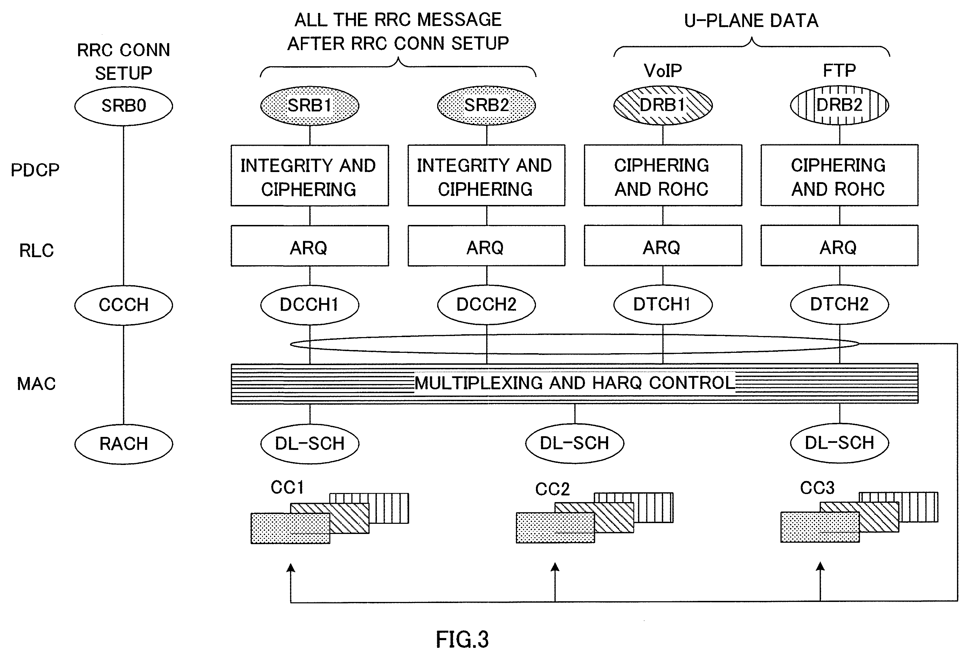

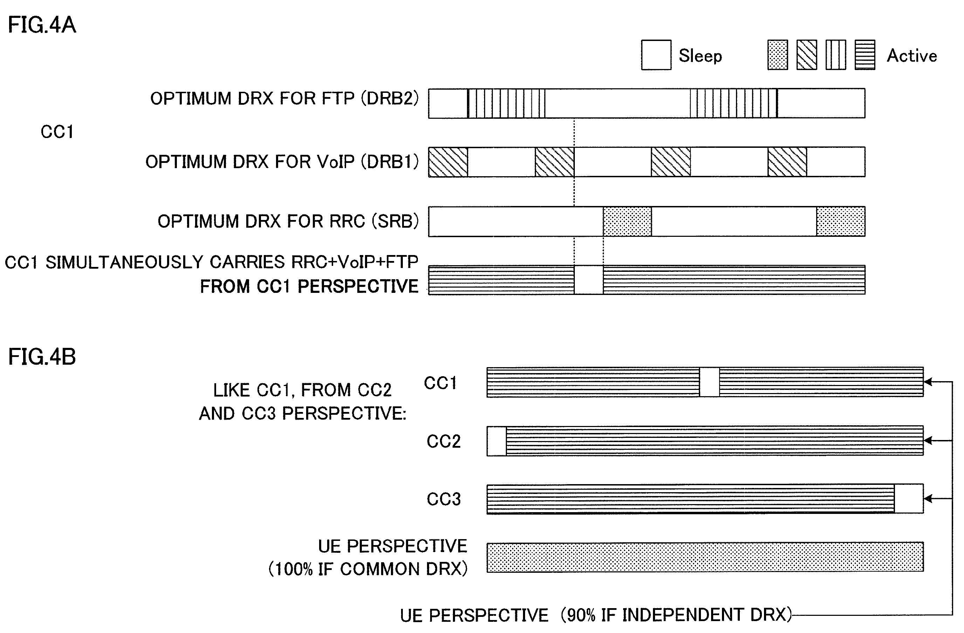

However, when the user terminal is connected to both of the macro base station and the small base station (dual connectivity), as explained with reference to Figs. 3 and 4, the above-mentioned DRX control may be insufficient to reduce power consumption of the user terminal. Fig. 3 is an explanatory diagram of one example of association of radio bearers with CCs.

As illustrated in Fig. 3, C-plane data (control data) such as RRC messages is transmitted by signaling radio bearer (SRB). Note that SRB is a radio bearer for control data. On the other hand, U-plane data (user data) such as VoIP and FTP is transmitted by a data radio bearer (DRB). Note that DRB is a radio bearer for user data. DRB may be configured per application (protocol) used by the user terminal.

For example, in Fig. 3, RRC messages after setup of RRC connection are transmitted by SRB 1 and SRB 2. In the PDCP (Packet Data Convergence Protocol) layer, PDCP entities are generated corresponding respectively to SRB 1 and SRB 2 and ciphering and integrity processing is performed. In the RLC (Radio Link Control) layer, RLC entities are generated corresponding respectively to SRB 1 and SRB 2, and ARQ (Automatic Repeat reQuest) processing is performed. Then, SRB 1 and SRB 2 are mapped to dedicated control channels (DCCH 1 and DCCH 2). Note that DCCH is a logical channel for transmission and reception of control data with the user terminal.

Besides, in Fig. 3, VoIP data is transmitted by DRB 1 and FTP data is transmitted by DRB 2. In the PDCP layer, PDCP entities are generated corresponding respectively to DRB 1 and DRB 2 and ciphering and ROHC (Robust Header Compression) processing is performed. In the RLC layer, RLC entities are generated corresponding respectively to DRB 1 and DRB 2, and ARQ processing is performed. Then, DRB 1 and DRB 2 are mapped to dedicated traffic channels (DTCH 1 and DTCH 2). Note that DTCH is a logical channel for transmission and reception of user data with the user terminal.

Further, in the MAC (Media Access Control) layer, DCCH 1 and DCCH 2 corresponding respectively to SRB 1 and SRB 2 and DTCH 1 and DTCH 2 corresponding respectively to DRB 1 and DRB 2 are multiplexed and mapped to downlink shared channels (DL-SCHs). Note that DL-SCH is a transport channel that is used in downlink data transmission. RRC messages, VoIP data and FTP data mapped to the DL-SCHs are each transmitted in CC 1 to CC 3.

As illustrated in Fig. 3, when SRB 1, SRB 2, DRB 1 and DRB 2 of different QoS (Quality of Service) classes are multiplexed to be associated with CC 1 to CC 3, all of CC 1 to CC 3 are applied with the DRX set for radio bearers with strict requirements for band warranty and allowable delay time (e.g., SRB 1, SRB 2 to transmit RRC messages and DRB 1 to transmit VoIP data). Note that DRX set is a group of parameters used in DRX control, including, for example, setting values of drx-InactivityTimer (T_{I}), drxShortCycleTimer (T_{S}), Short DRX Cycle (T_{SC}), Long DRX Cycle (T_{LC}) onDurationTimer(On1) of Fig. 2.

With reference to Fig. 4, description is made about an example of DRX control when RRC messages, VoIP data and FTP data are transmitted in all of CC 1 to CC 3 (see Fig. 3). Fig. 4A is a diagram for explaining an example of DRX control when RRC messages, VoIP data and FTP data are transmitted in CC 1. As illustrated in Fig. 4A, the duration where the user terminal in CC 1 needs to be in an active state differs among the RRC messages, VoIP data and FTP data. Therefore, referring to CC 1, the duration where none of the RRC messages, VoIP data and FTP data is transmitted is only regarded as a sleep duration for the user terminal.

As illustrated in Fig. 4B, as for CC 2 and CC 3, the duration where none of RRC messages, VoIP data and FTP data is transmitted is regarded as a sleep duration for the user terminal. In addition, in Fig. 4B, the sleep durations of CC1 to CC 3 differ from each other. Consequently, the user terminal receiving CC 1, CC 2 and CC 3 continue to be in the active state.

Thus, when an SRB and plural DRBs are associated with all the CCs, it is difficult to provide enough sleep duration for the user terminal, which prevents sufficient reduction of power consumption of the user terminal. On the other hand, in the radio communication system to which C/U plane split is applied, an SRB and a plurality of DRBs are expected to be associated with mutually different CCs.

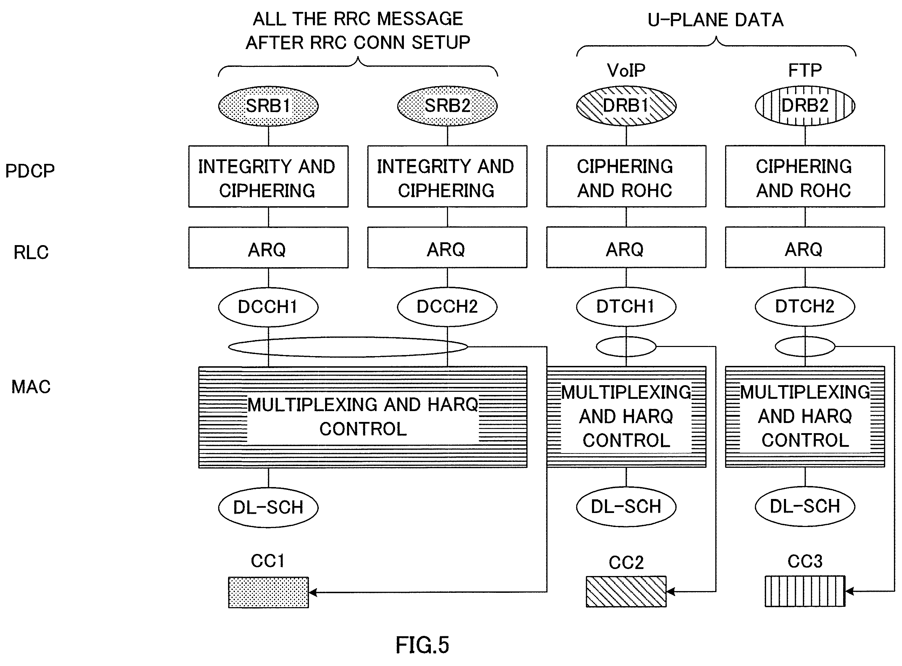

Fig. 5 is a diagram for explaining association of radio bearers with CCs in the radio communication system applied with C/U plane split. As illustrated in Fig. 5, in the radio communication system to which C/U split is applied, in the MAC layer, DCCH 1, DCCH 2 corresponding to SRB 1 and SRB 2 are not multiplexed with DTCH 1, DTCH 2 corresponding to DRB 1, DRB 2, but are transmitted in DL-SCH of CC 1. Besides, DTCH 1 and DTCH 2 corresponding to DRB 1 and DRB 2 are not multiplexed but are transmitted in DL-SCHs of different CC 2 and CC 3 respectively.

Thus, in the radio communication system to which C/U plane split is applied, an SRB and plural DRBs are not multiplexed but are transmitted in mutually different CCs. Accordingly, in Fig. 5, DRX control is performed differently per CC, unlike in Fig. 3.

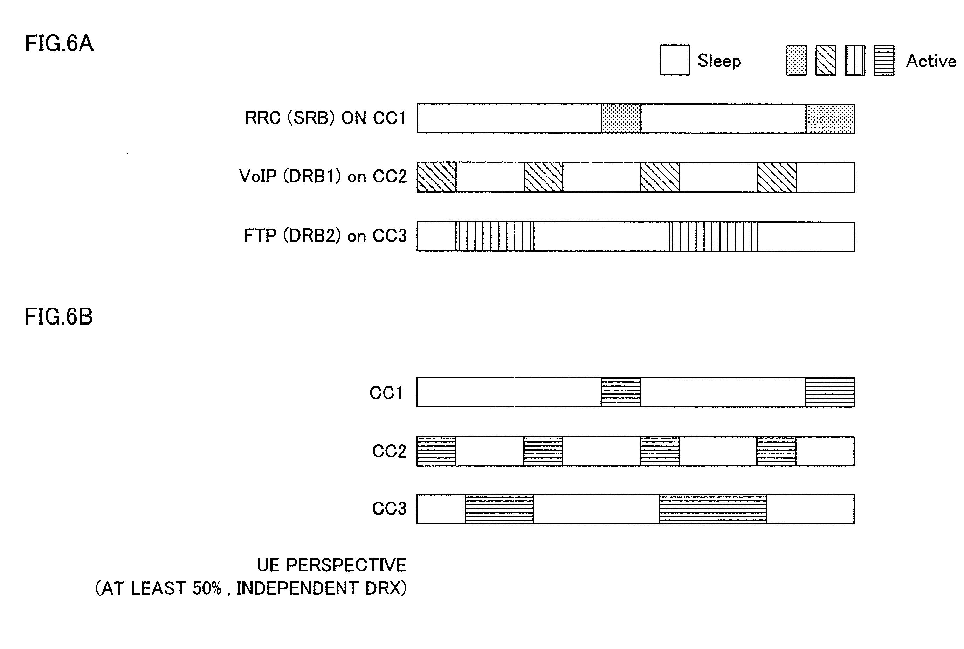

With reference to Fig. 6, description is made about an example of DRX control where RRC messages, VoIP data and FTP data are transmitted in mutually different CC 1 to CC 3 (see Fig. 5). In this case, as illustrated in Fig. 6A, in CC 1, the duration where RRC messages are transmitted is the duration in which the user terminal is in the active state (hereinafter referred to as "active duration") and the remaining duration becomes the sleep duration. In CC 2, the duration where VoIP data is transmitted is the active duration and the remaining duration becomes the sleep duration. And, in CC 3, the duration where FTP data is transmitted is the active duration and the remaining duration becomes the sleep duration.

As illustrated in Fig. 6B, when DRX control is applied differently per CC, the sleep duration is able to be made longer than that in the case of Fig. 4B. Here, the sleep duration per user terminal differs depending on the way to install a reception circuit (RF (Radio Frequency) circuit) in the user terminal.

Thus, in the radio communication system to which C/U plane split is applied, DRX control is applied differently per CC thereby to be able to reduce power consumption of the user terminal. In view of this, the present inventors have found the idea of configuring one or more radio bearers associated with one or more CCs of a macro cell and one or more radio bearers associated with one or more CCs of a small cell with different DRX sets thereby to apply different DRX controls.

Specifically, in the discontinuous reception method according to the present invention, a radio bearer configured in the user terminal is classified into RB (radio bearer) group 1 (first group) including one or more radio bearers associated with the CCs of a macro cell and RB group 2 (second group) including one or more radio bearers associated with the CCs of a small cell. In addition, the DRX set 1 (first parameter set) used in discontinuous reception of data via the radio bearers of the RB group 1 and the DRX set 2 (second parameter set) used in discontinuous reception of data via the radio bearers of the RB group 2 are transmitted from the macro base station to the user terminal.

The following description is made in detail about the present embodiment, with reference to the accompanying drawings. In the following description, it is assumed that the component carriers (CCs) 1, 2 of the macro cell and the component carrier (CC) 3 of the small cell are aggregated to perform carrier aggregation. However, the present embodiment is not limited to this, and the number of CCs may be changed appropriately. In addition, the macro cell and the small cell may be called PCell and SCell, respectively.

### (RB group classification)

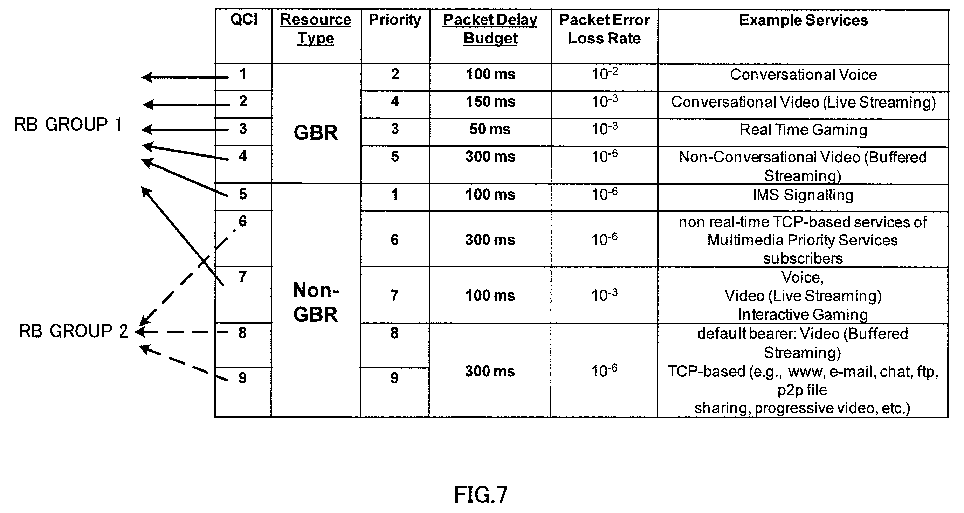

Fig. 7 is a diagram for explaining an example of RB groups 1 and 2. Radio bearers configured for the user terminal are classified into the RB group 1 and the RB group 2 based on QoS class. As illustrated in Fig. 7, QoS class is determined by resource type such as band-guaranteed GBR (Guaranteed Bit Rate) and band-not-guaranteed GBR (Non-Guaranteed Bit Rate (Non-GBR)) and allowable delay time (Packet Delay Budget), and is identified by QoS class identifier (QCI).

In Fig. 7, the RB group 1 includes radio bearers of QoS class 1 to 4 of which the resource type is GBR and radio bearers of QoS classes 5, 7 of which the resource type is Non-GBR and the Packet Delay Budget is a predetermined threshold (for example, 100 ms) or less. On the other hand, the RB group 2 includes radio bearers of QoS classes 6, 8 and 9 of which the resource type is Non-GBR and the Packet Delay Budget is longer than predetermined threshold (for example, 100 ms).

For example, according to Fig. 7, SRB to transmit RRC messages is of QoS class 4 and is classified into RB group 1. DRB 1 to transmit VoIP data is of QoS class 7 and is classified into RB group 1. On the other hand, DRB 2 to transmit FTP data is of QoS class 8 or 9 and is classed into RB group 2.

Besides, the SRB classified into RB group 1 is associated with the CC 1 of the macro cell. In the same manner, the DRB 1 classified into RB group 1 is associated with the CC 2 of the macro cell. On the other hand, the DRB 2 classified into RB group 2 is associated with the CC 3 of the small cell. With this association, the data with strict requirement for low Packet Delay Budget (short allowable delay time) and high reliability such as RRC messages and VoIP data is transmitted from the macro bas station and the burst-type data with not-strict requirement for Packet Delay Budget is transmitted from the small base station.

### (Setup of DRX set)

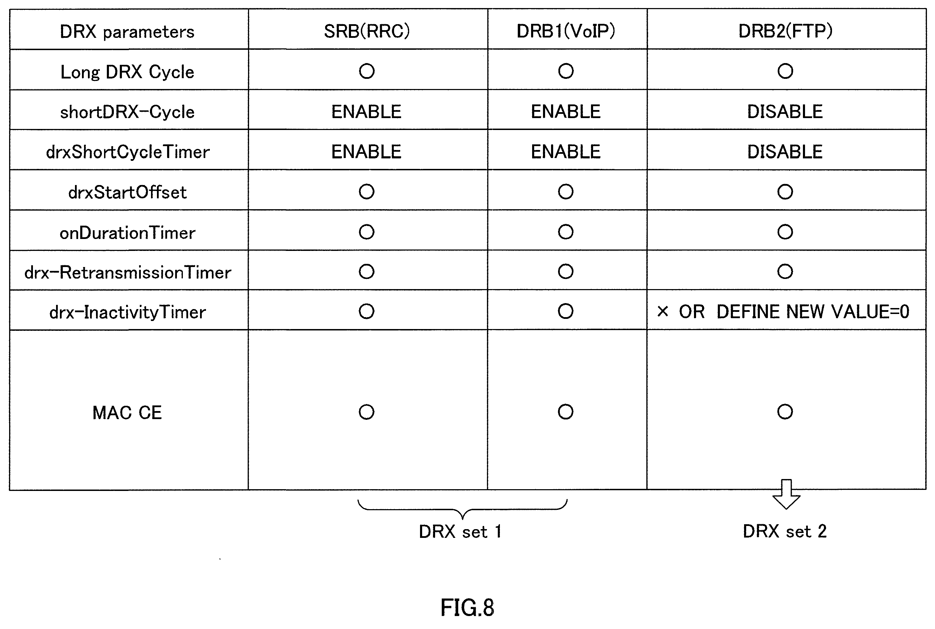

The radio bearers that are classified into RB groups 1 and 2 described above are defined with mutually different DRX sets. Note that the DRX set is a group of parameters used in discontinuous reception (or parameter setting values). Fig. 8 is a diagram for explaining an example of DRX sets 1 and 2. The DRX set 1 is used for discontinuous reception of data via radio bearers (SRB, DRB 1) classified into RB group 1. On the other hand, the DRX set 2 is used for discontinuous reception of data via radio bearers (DRB 2) classified into RB group 2.

More specifically, as illustrated in Fig. 8, the DRX set 1 may include setting values of Short DRX Cycle (first discontinuous reception cycle), drxShortCycleTimer (first timer) indicating the duration to continue Short DRX Cycle, Long DRX Cycle (second discontinuous reception cycle) that is longer than Short DRX Cycle, onDurationTimer (second timer) indicating ON duration in Short DRX Cycle or Long DRX Cycle.

In addition, the DRX set 1 may include a setting value of drx-InactivityTimer (third timer) indicating the duration to continue the active state of the user terminal after successful decoding of downlink control information (DCI) (PDCCH) for the user terminal. When drx-InactivityTimer expires, Short DRX Cycle may start. The DRX set 1 may include a MAC control element (MAC CE) instructing stop of onDurationTimer or drx-InactivityTimer, or start or restart of drxShortCycleTimer.

Further, the DRX set 1 may include drxStartOffset, drx-RetransmissionTimer and so on. Note that drxStartOffset is an offset indicating a start position of the DRX cycle and drx-RetransmissionTimer is a predetermined duration that starts at instruction of downlink retransmission by the user terminal. Here, until drx-RetransmissionTimer expires, the user terminal continues to be in the active state.

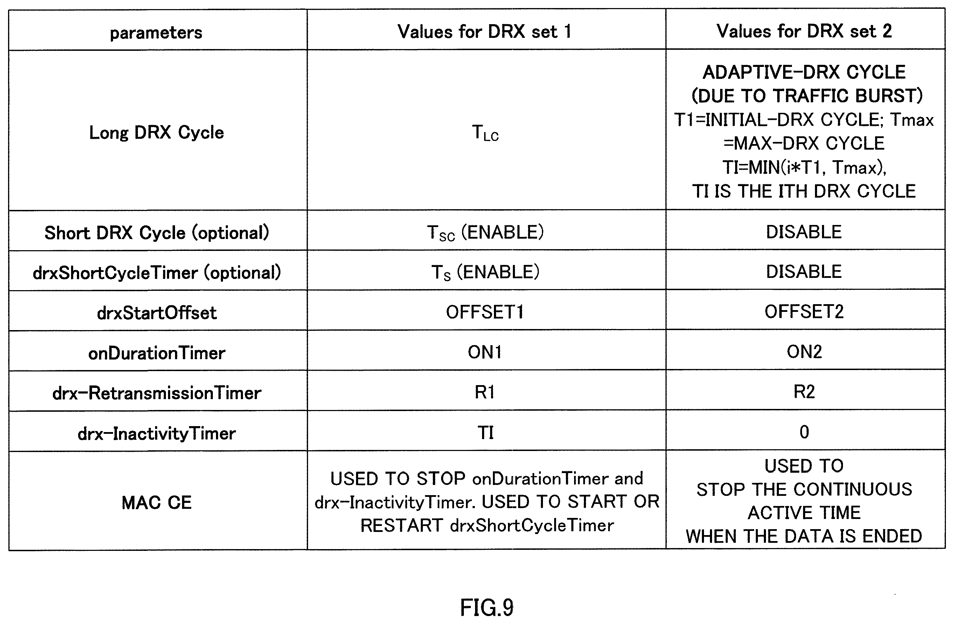

On the other hand, the DRX set 2 may include a setting value of Long DRX Cycle, not setting values of Short DRX Cycle and drxShortCycleTimer mentioned above. Besides, the DRX set 2 may not include drx-InactivityTimer, but may include drx-InactivityTimer of which the value is set to "0". Further, the DRX set 2 may include MAC CE described in detail in Fig. 9.

With reference to Fig. 9, description is made about setting values of DRX sets 1 and 2. As illustrated in Fig. 9, each parameter of the DRX set 1 is configured in the same manner as in Fig. 2. On the other hand, as for the DRX set 2, it include an initial value and a maximum value of Long DRX Cycle, which value is calculated by the user terminal to become gradually longer based on the initial value and the maximum value. Specifically, the initial value T₁ (Initial-DRX cycle) and the maximum value Tₘₐₓ (Max-DRX cycle) of Long DRX Cycle of the DRX set 2 are set, and a setting value of the i-th Long DRX Cycle is calculated by Ti = min (I*T₁, Tₘₐₓ).

Further, the setting value ON 2 of onDurationTimer of the DRX set 2 may be set longer than the setting value ON 1 of onDurationTimer of the DRX set 1. As described above, the setting values of Short DRX Cycle, drxShortCycleTimer, drx-InactivityTimer of the DRX set 2 may be set to "disable" or 0.

Furthermore, MAC CE of the DRX set 2 is used to stop the active state of the user terminal when data ends. As described above, MAC CE of the DRX set 1 is used to stop onDurationTimer or drx-InactivityTimer or start or restart drxShortCycleTimer. Thus, MAC CE of the DRX set 2 may be used in a different manner from MAC CE of the DRX set 1.

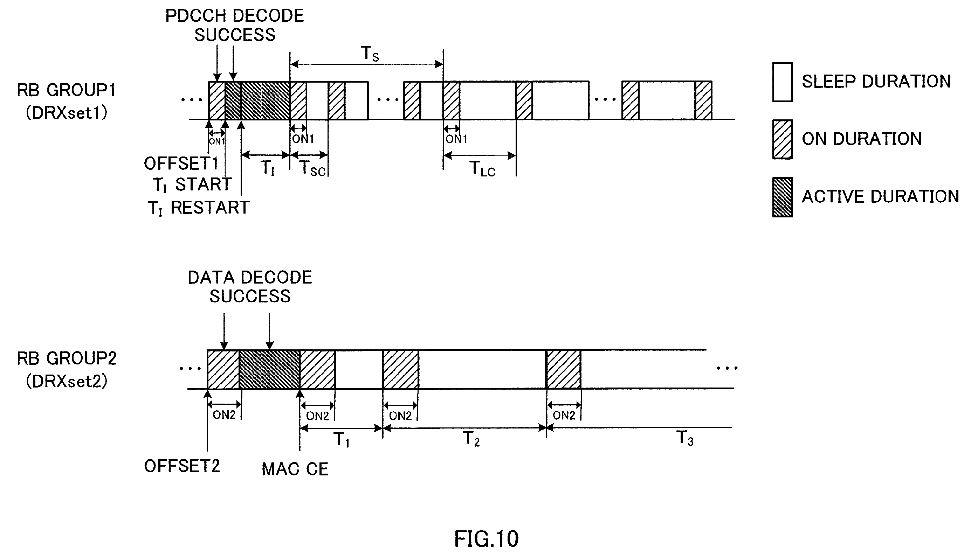

Fig. 10 is a diagram for explaining an example of DRX control using DRX sets 1 and 2 as illustrated in Fig. 9. As illustrated in Fig. 10, in the DRX control following the DRX set 1, after the user terminal has succeeded in decoding of PDCCH and until drx-InactivityTimer (T_{I}) expires, the user terminal continues to be in the active state (active duration). Thus, in the DRX set 1, drx-InactivityTimer (T_{I}) is used to continue the active state for a predetermined duration, thereby to prevent the user terminal from coming back into the active state immediately after DRX cycle starts.

In the DRX control following the DRX 1, when drx-InactivityTimer (T_{I}) expires, the user terminal starts Short DRX Cycle (T_{SC}) and runs drxShortCycleTimer (T_{S}). When drxShortCycleTimer (T_{S}) expires, the user terminal starts Long DRX Cycle (T_{LC}). In this way, in DRX set 1, two DRX cycles (Short DRX Cycle (T_{SC}) and Long DRX Cycle (T_{LC})) are provided thereby to prevent packet delay.

On the other hand, in DRX control following the DRX set 2, when the user terminal succeeds in decoding of data during ON duration (ON 2), the user terminal continues to be in the active state until receiving MAC CE (see Fig. 9). When receiving MAC CE, the user terminal immediately starts Long DRX Cycle. DRX set 2 is applied to the data that is to be transmitted from the small base station (for example, burst-type data of relatively long allowable delay time). Accordingly, there is no need to provide drx-InactivityTimer and Short DRX Cycle to prevent packet delay like in DRX set 1.

In addition, in DRX control following the DRX set 2, Long DRX Cycle (T_{LC}) is set such that the sleep duration becomes longer every time it is repeated. Accordingly, it is possible to improve the effect of reducing power consumption of the user terminal. Besides, the DRX control following the DRX set 2 is suitable for burst-type data since the ON duration (ON 2) of the DRX set is set longer than the ON duration (ON 1) of the DRX set 1.

### (Example of Notification of DRX Set)

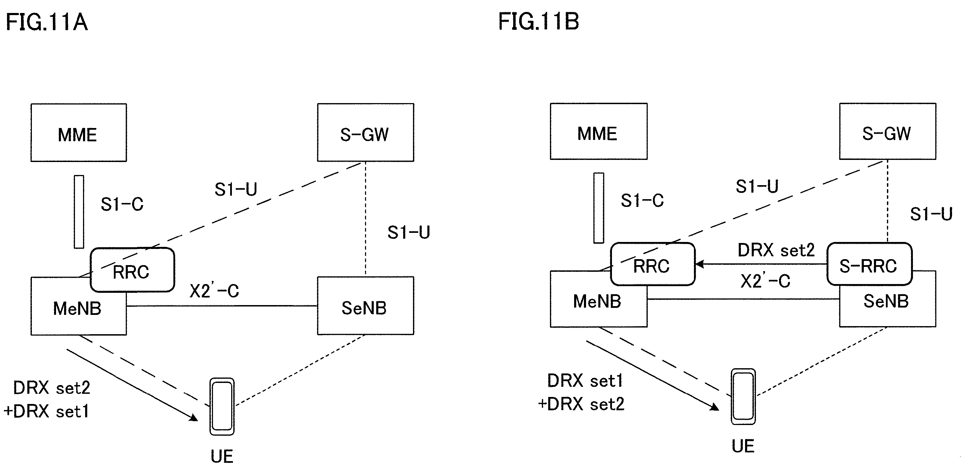

Next description is made about an example of notification of a DRX set as described above. Fig. 11 is a diagram for explaining an example of notification of a DRX set. In Fig. 11, the macro base station (MeNB) and the small base station (SeNB) are connected to each other by X2'-C interface as Non-ideal backhaul. MME (Mobility Management Entity) is an apparatus that performs mobility management of the user terminal (UE) and is connected to the macro base station by S1-C interface. Further, S-GW (Serving-GateWay) is an apparatus that performs user data that is transmitted from the macro base station or the small base station to the user terminal, and is connected to the macro base station and the small base station by S1-U interface.

Further, in Fig. 11, between the macro base station and the user terminal, one or more signaling radio bearers (SRBs) are configured. This SRB is used to transmit RRC messages from the macro base station to the user terminal. In addition, between the macro base station and the user terminal, one or more data radio bearers (DRBs) are configured. The DRBs are used to transmit user data (e.g., VoIP data), which has been transmitted from S-GW via S1-U interface, from the macro base station to the user terminal. Further, between the small base station and the user terminal, one or more data radio bearers (DRB) are configured. The DRBs are used to transmit user data (e.g., FTP data), which has been transmitted from S-GW via S1-U interface, from the small base station to the user terminal.

Furthermore, in Fig. 11, carrier aggregation is performed aggregating one or more CCs of the macro base station (macro cell) and one or more CCs of the small base station (small cell). The radio bearers classified into the RB group 1 (for example, the above-described SRB and DRB carrying VoIP data) are associated with the CCs of the macro base station. On the other hand, the radio bearers classified into the RB group 2 (for example, the above-described DRB carrying FTP data) are associated with the CCs of the small base station.

With reference to Figs. 11A and 11B, description is made about examples of notification of DRX sets 1 and 2 used in discontinuous reception of data via radio bearers of the RB groups 1 and 2. In the notification example illustrated in Fig. 11A, the macro base station configures both of the DRX set 1 and the DRX set 2. The macro base station notifies the user terminal of the configured DRX sets 1 and 2 by RRC signaling.

On the other hand, in the notification example illustrated in Fig. 11B, the macro base station configures the DRX set 1 and the small base station configures the DRX set 2. The small base station notifies the macro base station of the configured DRX set 2 by X2'-C interface. The macro base station notifies the user terminal of the DRX set 1 configured by the macro base station and the DRX set 2 configured by the small base station, by RRC signaling.

Here, notification of the DRX sets 1 and 2 is not limited to that performed by RRC signaling, and may be performed by higher layer signaling such as MAC signaling, a broadcast channel or using system information. Besides, the DRX set 2 may be signaled from the small base station to the user terminal, though it is not shown in the figure.

As described above, in the discontinuous reception method according to the present embodiment, the RB group 1 including radio bearers associated with the CC of the macro cell and the RB group 2 including radio bearers associated with the CC of the small cell are applied with mutually different DRX sets 1 and 2. As a result, data transmitted from the macro base station (data with requirements for high reliability and relatively short allowable delay time, such as RRC messages and VoIP data) is subjected to DRX control following the DRX set 1 so as not to cause packet delay. On the other hand, data transmitted from the small base station (data of relatively long allowable delay time, such as FTP data) is subjected to DRX control following the DRX set 2 so as to enhance the effect of reducing power consumption of the user terminal.

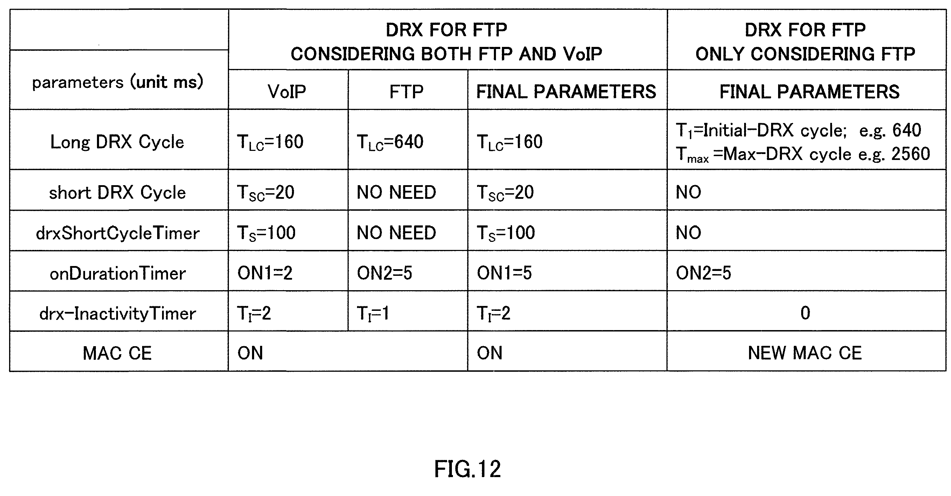

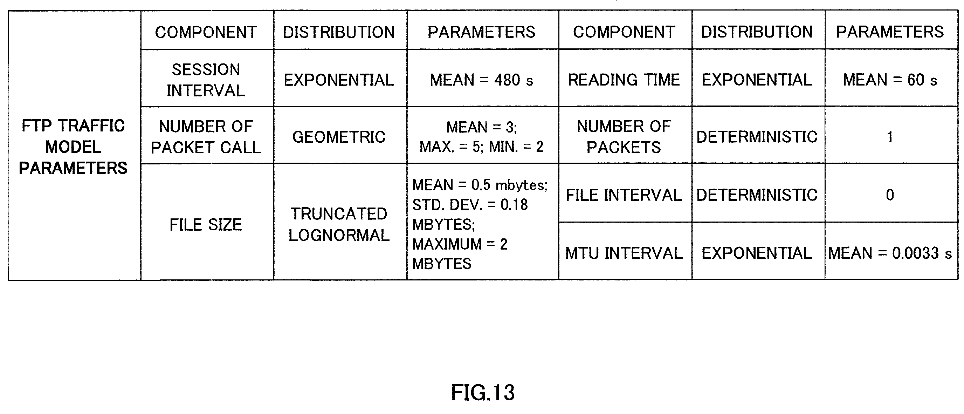

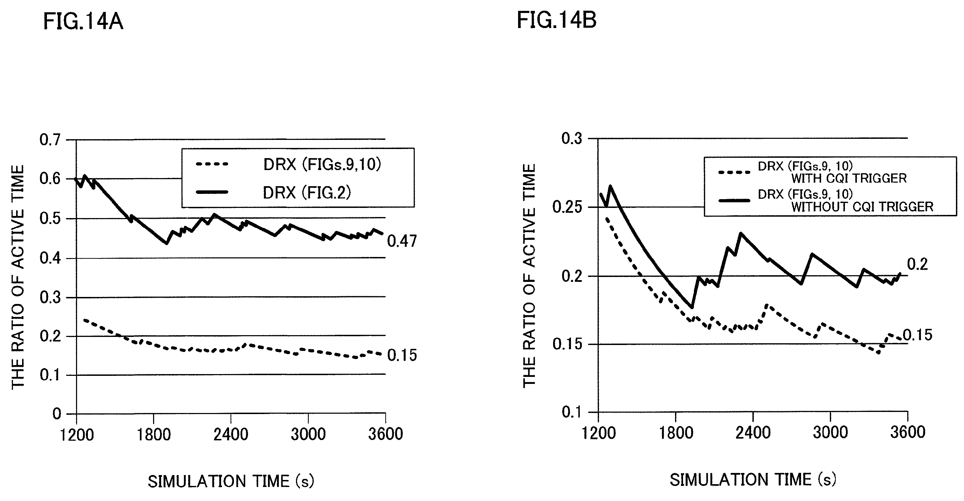

Here, with reference to Figs. 12 to 14, the effect of the discontinuous reception method according to the present embodiment will be explained comparing the DRX control as illustrated in Fig. 2 with the DRX control as illustrated in Figs. 9 and 10. Figs. 12 and 13 are diagrams illustrating setting conditions for comparison between the DRX control as illustrated in Fig. 2 with the DRX control as illustrated in Figs. 9 and 10. Fig. 14A is a diagram showing comparative results of the active duration between the DRX control as illustrated in Fig. 2 and the DRX control as illustrated in Figs. 9 and 10.

As illustrated in Fig. 12, in the DRX control illustrated in Fig. 2, the DRX set for FTP data is configured in such a manner as to be able to meet strict requirements for both of the FTP data and VoIP data. On the other hand, in the DRX control illustrated in Figs. 9 and 10, the DRX set 2 for FTP data transmitted by DRB of the RB group 2 is configured independent from the DRX set 1 for VoIP data transmitted by DRB of the RB group 1.

Thus, in the DRX control illustrated in Figs. 9 and 10, the DRX set 1 suitable for data transmitted from the macro base station (for example, RRC messages and VoIP data) and the DRX set 2 suitable for data transmitted from the small base station (for example, FTP data) are used. Accordingly, as illustrated in Fig. 14A, in the DRX control illustrated in Figs. 9 and 10, it is possible to reduce the active duration of the user terminal and thereby to reduce power consumption of the user terminal, as compared with the DRX control illustrated in Fig. 2.

Further, Fig. 14B illustrates, in the DRX control illustrated in Figs. 9 and 10, comparative results of the active duration between the DRX control with CQI trigger and the DRX control without CQI trigger. Here, CQI (Channel Quality Indicator) is an indicator indicating channel quality measured by the user terminal. CQI trigger means performing DRX control based on CQI fed back from the user terminal. As illustrated in Fig. 14B, when the CQI trigger is used, the active duration of the user terminal can be reduced thereby to be able to reduce power consumption of the user terminal, as compared with the case of not using CQI trigger.

### (Configuration of Radio Communication System)

The following description is made in detail about a radio communication system according to the present embodiment. This radio communication system is applied with the above-described discontinuous reception method.

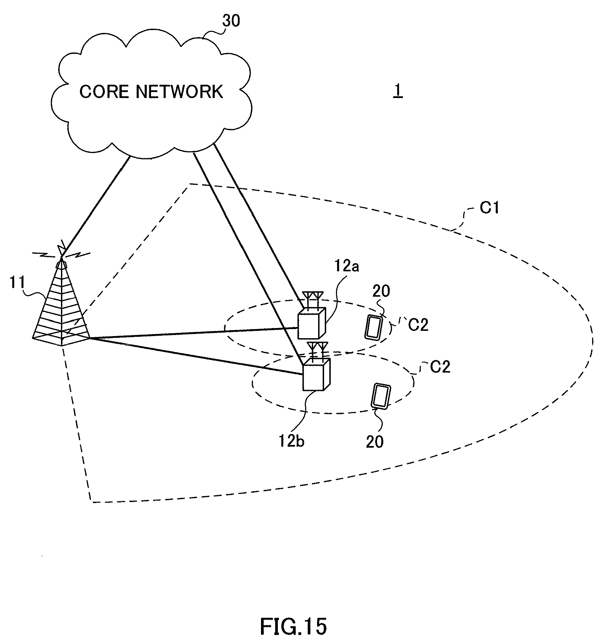

Fig. 15 is a schematic diagram of the radio communication system according to the present embodiment. As illustrated in Fig. 15, the radio communication system 1 includes a macro base station 11 forming a macro cell C1, and small base stations 12a and 12b that are arranged within the macro cell C1 and each form a smaller cell C2 than the macro cell C1. In the macro cell C1 and small cells C2, user terminals 20 are located. The macro cell C1 (macro base station 11), the small cells C2 (small base stations 12) and the user terminals 20 are not limited in number to those illustrated in Fig. 15.

In addition, in the macro cell C1 and each small cell C2, the user terminal 20 is located. The user terminal 20 is configured to be capable of radio communication with the macro base station 11 and/or one or more small base stations 12. The user terminal 20 is able to communicate with the plural small base stations 12 by using aggregation of component carriers (hereinafter referred to as "CCs") of the small cells C2 (carrier aggregation). Or, the user terminal 20 is able to communicate with the macro base station 11 and the small base stations 12 by using aggregation of CCs used in the macro cell C1 and the small cells C2. The number of CCs that are aggregated in carrier aggregation is five at the maximum, but is not limited to this.

Communication between the user terminal 20 and the macro base station 11 is performed by using a carrier of a relatively low frequency band (for example, 2 GHz. On the other hand, the communication between the user terminal 20 and the small base station 12 is performed by using a carrier of a relatively high frequency band (for example, 3.5 GHz), but is not limited to this. The macro base station 11 and the small base stations 12 may use the same frequency band.

In addition, the macro base station 11 and each small base station 12 may be connected to each other by a relatively low speed line such as X2 (or X2-C) interface (Non-Ideal backhaul), by a relatively high speed (low delay) line such as an optical fiber (Ideal backhaul) or by wireless communication. Besides, the small base stations 12 are also connected to each other by a relatively low speed line such as X2 (or X2-C) interface (Non-Ideal backhaul), by a relatively high speed line such as an optical fiber (Ideal backhaul) or by wireless communication.

The macro base station 11 and each small base station 12 are connected to a core network 30. The core network 30 is provided with core network apparatuses such as an MME (Mobility Management Entity), S-GW (Serving-GateWay) and P-GW (Packet-GateWay). The MME provided in the core network 30 is an apparatus that performs mobility management of the user terminal 20 and may be connected to the macro base station 11 by C-plane interface (for example, S1-C interface).

In addition, the S-GW provided in the core network 30 is an apparatus that processes user data transmitted from the macro base station 11 or the small base station 12 to the user terminal 20, an may be connected to the macro base station 11 and small base station 12 by U-plane interface (for example, S1-U interface).

Further, the macro base station 11 is a radio base station having a relatively wide coverage area and may be called eNodeB, macro base station, aggregation node, transmission point, transmission/reception point or the like. The small base station 12 is a radio base station having a local coverage area and may be called small base station, pico base station, femto base station, Home eNodeB, RRH (Remote Radio Head), micro base station, transmission point, transmission/reception point or the like. In the following description, the macro base station 11 and the small base stations 12 are each collectively called radio base station 10, unless they are described discriminatingly. The user terminal 20 is a terminal supporting various communication schemes such as LTE and LTE-A and may include not only mobile communication terminal, but also fixed or stationary communication terminal.

Further, in the radio communication system 1, as downlink physical channels, there are used a physical downlink shared channel (PDSCH) that is used by each user terminal 20 on a shared basis, a physical downlink control channel (PDCCH), an enhanced physical downlink control channel (EPDCCH), a physical broadcast channel (PBCH) and so on. The PDSCH is used to transmit user data and higher control information. The PDCCH and EPDCCH are used to transmit downlink control information (DCI).

Furthermore, in the radio communication system 1, as uplink physical channels, there are used a physical uplink shared channel (PUSCH) that is used by each user terminal 20 on a shared basis, a physical uplink control channel (PUCCH) and so on. The PUSCH is used to transmit user data and higher layer control information. The PUCCH is used to transmit downlink radio quality information (CQI: Channel Quality Indicator), transmission acknowledgement information (ACK/NACK) and so on.

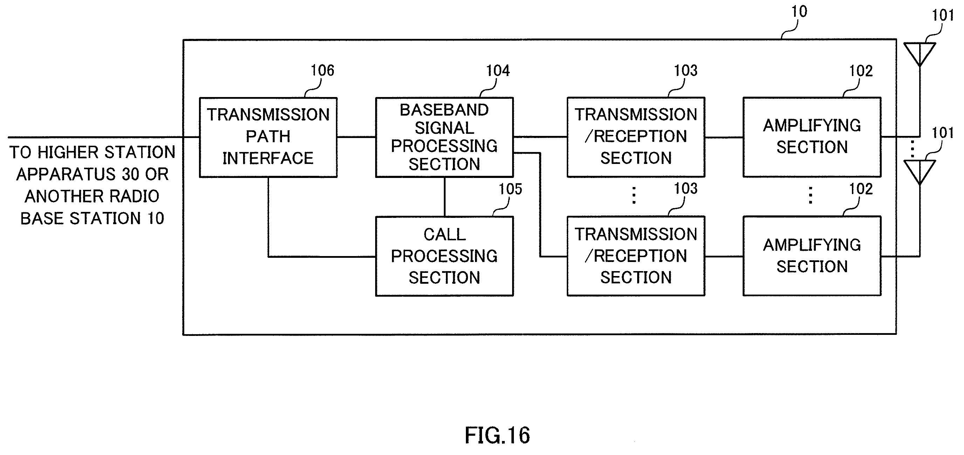

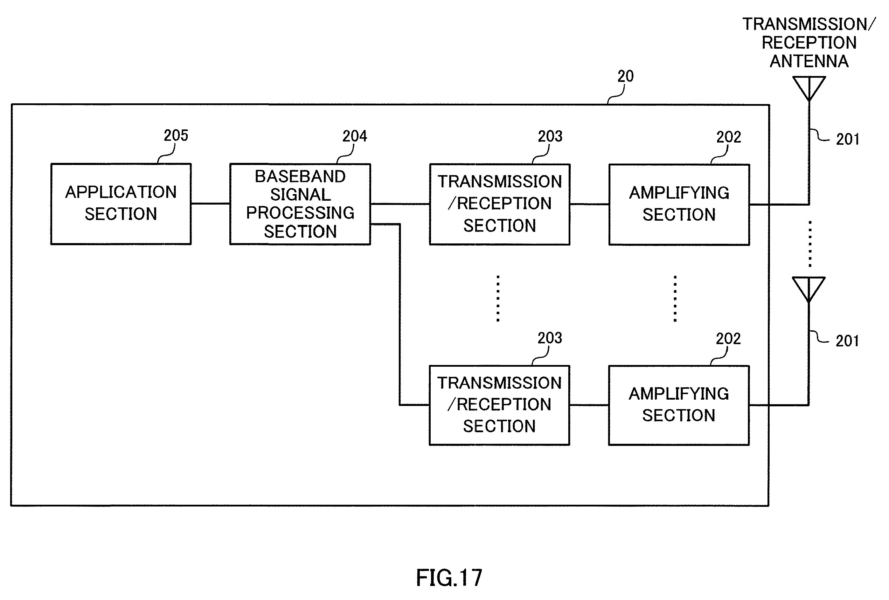

With reference to Figs. 16 and 17, description is made about the entire configurations of the radio base station 10 (including the macro base station 11 and the small base station 12) and the user terminal 20. Fig. 16 illustrates the entire configuration of the radio base station 10 and Fig. 17 illustrates the entire configuration of the user terminal 20.

As illustrated in Fig. 16, the radio base station 10 is configured to have a plurality of transmission/reception antennas 101 for MIMO transmission, amplifying sections 102, transmission/reception sections (transmission sections) 103, a baseband signal processing section 104, a call processing section 105 and a transmission path interface 106.

User data that is to be transmitted on the downlink from the radio base station 10 to the user terminal 20 is input from the S-GW provided in the core network 30, through the transmission path interface 106, into the baseband signal processing section 104.

In the baseband signal processing section 104, signals are subjected to PDCP layer processing, RLC (Radio Link Control) layer transmission processing such as division and coupling of user data and RLC retransmission control transmission processing, MAC (Medium Access Control) retransmission control, including, for example, HARQ transmission processing, scheduling, transport format selection, channel coding, inverse fast Fourier transform (IFFT) processing, and precoding processing, and resultant signals are transferred to the transmission/reception sections 103. As for downlink control signals (including reference signals, synchronization signals and broadcast signals), transmission processing is performed, including channel coding and inverse fast Fourier transform, and resultant signals are also transferred to the transmission/reception sections 103.

In the transmission/reception sections 103, baseband signals that are precoded per antenna and output from the baseband signal processing section 104 are subjected to frequency conversion processing into a radio frequency band. The frequency-converted radio frequency signals are amplified by the amplifying sections 102 and then, transmitted from the transmission/reception antennas 101.

Meanwhile, as for uplink signals, radio frequency signals are received in the transmission/reception antennas 101, amplified in the amplifying sections 102, subjected to frequency conversion and converted into baseband signals in the transmission/reception sections 103, and are input to the baseband signal processing section 104.

The baseband signal processing section 104 performs FFT processing, IDFT processing, error correction decoding, MAC retransmission control reception processing, and RLC layer and PDCP layer reception processing on the user data included in the signals received on the uplink. Then, the signals are transferred to the higher station apparatus 30 through the transmission path interface 106. The call processing section 105 performs call processing such as setting up and releasing a communication channel, manages the state of the radio base station 10 and manages the radio resources.

Fig. 17 illustrates the entire configuration of the user terminal 20 according to the present embodiment. The user terminal 20 is configured to have a plurality of transmission/reception antennas 201 for MIMO transmission, amplifying sections 202, transmission/reception sections (reception sections) 203, a baseband signal processing section 204, and an application section 205.

As for the downlink data, radio frequency signals received by the transmission/reception antennas 201 are amplified in the amplifying sections 202, and then, subjected to frequency conversion and converted into baseband signals in the transmission/reception sections 203, and the resultant signals are input to the baseband signal processing section 204. In the baseband signal processing section 204, the signals are subjected to FFT processing, error correction coding, reception processing for retransmission control and so on. In the downlink signals, user data is transferred to the application section 205. The application section 205 performs processing related to higher layers above the physical layer and the MAC layer. In the downlink data, broadcast information is also transferred to the application section 205.

On the other hand, uplink user data is input from the application section 205 to the baseband signal processing section 204. In the baseband signal processing section 204, retransmission control (H-ARQ: Hybrid-ARQ) transmission processing, channel coding, precoding, DFT processing, IFFT processing and so on are performed, and the resultant signals are transferred to the transmission/reception sections 203. In the transmission/reception sections 203, the baseband signals output from the baseband signal processing section 204 are subjected to frequency conversion and converted into a radio frequency band. After that, the frequency-converted radio frequency signals are amplified in the amplifying sections 202, and then, transmitted from the transmission/reception antennas 201.

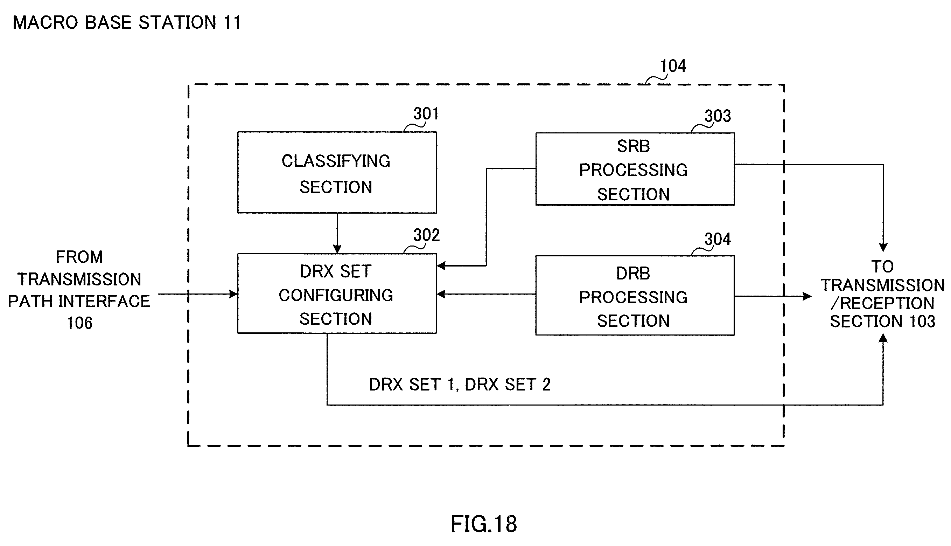

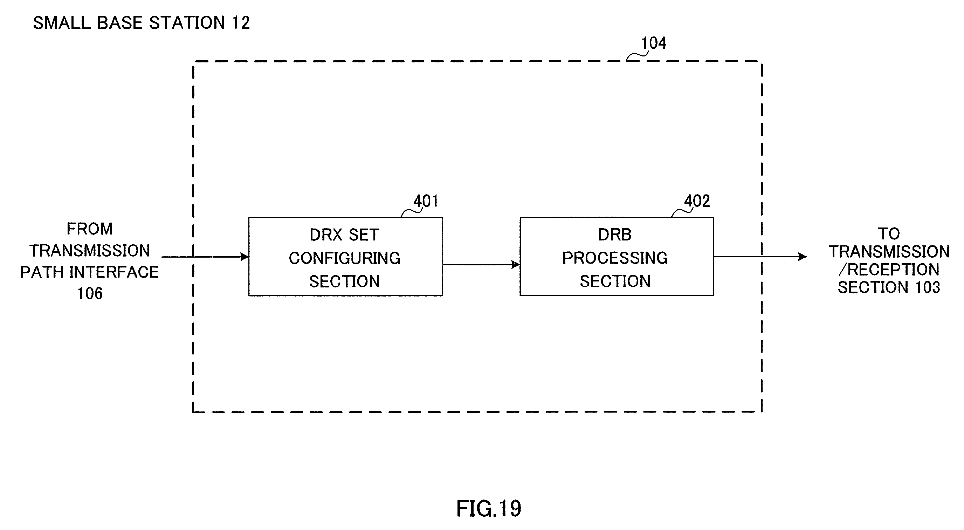

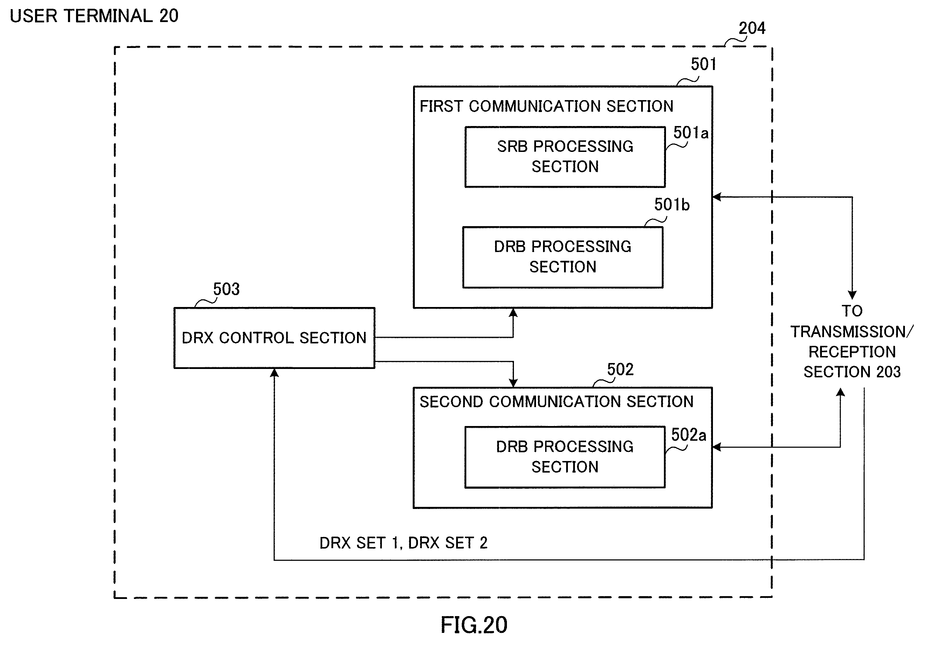

Next description is made, with reference to Figs. 18 to 20, about detailed functional structures of the macro base station 11, the small base station 12 and the user terminal 20. The functional structures of the macro base station 11 illustrated in Fig. 18 and the small base station 12 illustrated in Fig. 19 are mainly configured by the baseband signal processing sections 104. The functional structure of the user terminal 20 illustrated in Fig. 20 is mainly configured by the baseband signal processing section 204.

Fig. 18 is a diagram illustrating the functional structure of the macro base station 11 according to the present embodiment. As illustrated in Fig. 18, the macro base station 11 has a classifying section 301, a DRX set configuring section (configuring section) 302, a signaling radio bearer (SRB) processing section 303, and a data radio bearer (DRB) processing section 304.

The classifying section 301 classifies radio bearers configured in the user terminal 20 into RB group 1 or RB group 2. Note that the RB group 1 includes bearers associated with the component carrier (CC) of the macro cell C1 (macro base station 11). On the other hand, the RB group 2 includes radio bearers associated with the CC of the small cell C2 (small base station 12).

Specifically, as explained with reference to Fig. 7, the classifying section 301 classifies radio bearers configured in the user terminal, based on QoS class (for example, whether it is GBR or not and whether or not the allowable delay time is a predetermined value or less). For example, the classifying section 301 classifies SRB carrying RRC messages and DRB carrying VoIP data into the RB group 1. On the other hand, the classifying section 301 classifies DRB carrying FTP data into the RB group 2.

The DRX set configuring section 302 configures DRX set 1 for the RB group 1 and DRX set 2 for the RB group 2. Here, the DRX set 1 is a group of parameters used in discontinuous reception of data via radio bearers of the RB group 1. The DRX set 2 is a group of parameters used in discontinuous reception of data via radio bearers of the RB group 2.

Specifically, the DRX set configuring section 302 configures the DRX sets 1 and 2, as explained with reference to Figs. 8 to 10. The DRX set configuring section 302 may configure the DRX set 1 based on processing conditions (for example, data amount) in the SRB processing section 303 and DRB processing section 304. Besides, the DRX set configuring section 302 may configure the DRX set 2 by obtaining processing conditions in the DRB processing section 402 of the small base station 12, via the transmission path interface 106. Or, the DRX set configuring section 302 may receive the DRX set 2 configured in the small base station 12, via the transmission path interface 106.

Further, the DRX set configuring section 302 transmits the DRX sets 1 and 2 to the user terminal via the transmission/reception sections 103. For example, the DRX sets 1 and 2 may be transmitted to the user terminal 20 by higher layer signaling such as RRC signaling. Or, the DRX sets 1 and 2 may be transmitted to the user terminal 20 by using a physical broadcast channel or the like.

The SRB processing section 303 performs transmission and reception processing of control data (for example, RRC messages) via SRB of the RB group 1. For example, the SRB processing section 303 may perform Ciphering and Integrity processing as illustrated in Fig. 5, ARQ processing, mapping to a dedicated control channel (DCCH) as a logical channel, DCCH multiplexing processing, mapping to a downlink shared channel (DL-SCH) as a transport channel, associating with CC and so on. Here, DL-SCH is mapped to PDSCH as a physical channel.

The DRB processing section 304 performs transmission and reception processing of user data (for example, user data of relatively short allowable delay time such as VoIP data) via DRB of the RB group 1. For example, the DRB processing section 304 may perform Ciphering and ROHC processing as illustrated in Fig. 5, ARQ processing, mapping to a dedicated traffic channel (DTCH) as a logical channel, mapping to a downlink shared channel (DL-SCH) as a transport channel, associating with CC and so on. DRB is associated with a CC that is different from that of SRB.

Fig. 19 illustrates the functional structure of the small base station 12 according to the present embodiment. As illustrated in Fig. 19, the small base station 12 has a DRX set configuring section (configuring section) 401, and a data radio bearer (DRB) processing section 402.

The DRX set configuring section 401 configures the DRX set 2 for the RB group 2. Specifically, the DRX set configuring section 401 configures the DRX set 2 as explained with reference to Figs. 8 to 10. When the DRX set 2 is configured in the DRX set configuring section 302 of the macro base station 11, the DRX set configuring section 401 may be omitted. The DRX set configuring section 302 may transmit the DRX set 2 via the transmission/reception sections 103 to the user terminal 20.

The DRB processing section 402 performs transmission and reception processing of user data (user data of relatively long allowable delay time such as FTP data) via DRB of the RB group 2. For example, the DRB processing section 402 may perform Ciphering and ROHC processing as illustrated in Fig. 5, ARQ processing, mapping to a dedicated traffic channel (DTCH) as a logical channel, mapping to a downlink shared channel (DL-SCH) as a transport channel, associating with CC and so on.

Fig. 20 illustrates the functional structure of the user terminal 20 according to the present embodiment. As illustrated in Fig. 20, the user terminal 20 has a first communication section 501, a second communicating section 502, and a DRX control section (control section) 503.

The first communication section 501 performs communications via a radio bearer of RB group 1 by using a CC of the macro cell C1 (macro base station 11). Specifically, the first communication section 501 has a signaling radio bearer (SRB) processing section 501a and a data radio bearer (DRB) processing section 501b.

The SRB processing section 501a performs transmission and reception processing of control data (for example, RRC messages) via SRB of RB group 1. For example, the SRB processing section 501a may perform demapping from PDSCH to DL-SCH, demapping from DL-SCH to DCCH, ARQ processing, decoding processing and so on. Further, the SRB processing section 501a performs discontinuous reception of control data via SRB of RB group 1 in accordance with control by the DRX control section 503.

The DRB processing section 501b performs transmission and reception processing of user data (for example, VoIP data) via DRB of RB group 1. For example, the DRB processing section 501b may perform demapping from PDSCH to DL-SCH, demapping from DL-SCH to DTCH, ARQ processing, header decompression, decoding processing and so on. Further, the DRB processing section 501b performs discontinuous reception of user data via DRB of RB group 1 in accordance with control by the DRX control section 503.

The second communication section 502 performs communication via a radio bearer of RB group 2 by using a CC of the small cell C2 (small base station 12). Specifically, the second communication section 502 has a data radio bearer (DRB) processing section 502a.

The DRB processing section 502a performs transmission and reception processing of user data (for example, FTP data) via DRB of RB group 2. For example, the DRB processing section 502a may perform demapping from PDSCH to DL-SCH, demapping from DL-SCH to DTCH, ARQ processing, header decompression, decoding processing and so on. Further, the DRB processing section 502a performs discontinuous reception of user data via DRB of RB group 2 in accordance with control by the DRX control section 503.

The DRX control section 503 controls discontinuous reception of the first communication section 501 in accordance with the DRX set 1 and controls discontinuous reception of the second communication section 502 in accordance with the DRX set 2. The DRX sets 1 and 2 are signaled from the macro base station 11 by higher layer signaling such as RRC signaling and are input from the transmission/reception section 203 to the DRX control section 503.

Specifically, the DRX control section 503 controls the ON duration, active duration and sleep duration of the first communication section 501 in accordance with the DRX set 1. For example, as illustrated in Fig. 10, after successful decoding of PDCCH, the DRX control section 503 continues the active duration of the first communication section until drx-InactivityTimer (T_{I}) expires. Besides, when drx-InactivityTimer (T_{I}) expires, the DRX control section 503 may control the ON duration and sleep duration of the first communication section 501 in accordance with Short DRX Cycle (T_{SC}). In addition, when drxShortCycleTimer (T_{S}) expires, the DRX control section 503 may control the ON duration and sleep duration of the first communication section 501 in accordance with Long DRX Cycle (T_{LC}).

Further, the DRX control section 503 controls the ON duration, active duration and sleep duration of the second communication section 502 in accordance with the DRX set 2. For example, as illustrated in Fig. 10, after successful decoding of PDCCH in the ON duration (ON 2), the DRX control section 503 may continue the active duration of the second communication section 502 until receiving MAC CE. In addition, when receiving MAC CE, the DRX control section 503 may immediately control the ON duration and sleep duration of the second communication section 502 in accordance with Long DRX Cycle.

Here, the reception circuit (RF circuit) of the user terminal 20 may be provided in each of the first communication section 501 and the second communication section 502. If different reception circuits are provided in the first communication section 501 and the second communication section 502, it is possible to perform DRX control independently in accordance with the DRX set 1 and DRX set 2. With this independent control, it is possible to bring about enhancement of the effect of reduction of power consumption by DRX control. Provision of the reception circuit (RF circuit) is not limited to this, but may be provided per CC or may be provided in each of the SRB processing section 501a, the DRB processing section 501b and the DRB processing section 502a.

In the radio communication system 1, classification of radio bearers into RB group 1 and RB group 2 is described as being performed in the macro base station 11. However, this is not intended to limit the present invention. For example, classification may be performed in the small base station 12 or in the core network apparatus that controls the macro base station 11 and the small base station 12.

Up to this point, the present invention has been described in detail by way of the above-described embodiments. However, a person of ordinary skill in the art would understand that the present invention is not limited to the embodiments described in this description. The present invention could be embodied in various modified or altered forms without departing from the gist or scope of the present invention defined by the claims. Therefore, the statement in this description has been made for the illustrative purpose only and not to impose any restriction to the present invention.

The disclosure of Japanese Patent Application No. 2013-105642 filed on May 17, 2013, including the specification, drawings, and abstract, is incorporated herein by reference in its entirety.

## Claims

1. A radio base station forming a macro cell in a radio communication system in which carrier aggregation is performed by aggregating a component carrier of the macro cell and a component carrier of a small cell, the radio base station comprising:
a classifying section that classifies a radio bearer configured in a user terminal into a first group or a second group, the first group including a radio bearer associated with the component carrier of the macro cell, and the second group including a radio bearer associated with the component carrier of the small cell;
a transmission section that transmits, to the user terminal, a first parameter set to use in discontinuous reception of data via a radio bearer of the first group and a second parameter set to use in discontinuous reception of data via a radio bearer of the second group.

2. The radio base station according to claim 1, further comprising: a configuring section that configures the first parameter set and the second parameter set.

3. The radio base station according to claim 1, further comprising:
a configuring section that configures the first parameter set; and
a reception section that receives the second parameter set that is configured in a radio base station forming the small cell.

4. The radio base station according to claim 2 or 3, wherein
the first parameter set includes setting values of a first discontinuous reception cycle, a first timer indicating a duration to continue the first discontinuous reception cycle and a second discontinuous reception cycle that is longer than the first discontinuous reception cycle,
the second parameter set includes an initial value and a maximum value of the second discontinuous reception cycle, and
the second discontinuous reception cycle is determined to become gradually longer based on the initial value and the maximum value.

5. The radio base station according to claim 4, wherein
the first parameter set includes a setting value of a second timer indicating an ON duration in the second discontinuous reception cycle, and
the second parameter set includes a setting value of the second timer that is configured to be longer than the setting value of the second timer in the first parameter set.

6. The radio base station according to claim 2 or 3, wherein
the first parameter set includes a setting value of a third timer indicating a duration to continue an active state of the user terminal after successful decoding of downlink control information for the user terminal, and
the second parameter set does not include a setting value of the third timer or includes "0" as the setting value of the third timer.

7. The radio base station according to claim 2 or 3, wherein the second parameter set includes a control element to indicate stop of an active state of the user terminal.

8. The radio base station according to claim 1, wherein
the radio bearer of the first group includes a signaling radio bearer (SRB) and a data radio bearer (DRB) with GBR (Guaranteed Bit Rate) and allowable delay time that is equal to or shorter than a predetermined threshold, and
the radio bearer of the second group includes a data radio bearer (DRB) with non-GBR and allowable delay time longer than the predetermined threshold.

9. A user terminal used in a radio communication system in which carrier aggregation is performed by aggregating a component carrier of a macro cell and a component carrier of a small cell, the user terminal comprising:
a reception section that receives a first parameter set and a second parameter set form a radio base station forming the macro cell; and
a discontinuous reception control section that controls discontinuous reception of data via a radio bearer of a first group in accordance with the first parameter set and controls discontinuous reception of data via a radio bearer of a second group in accordance with the second parameter set, and
wherein a radio bearer associated with a component carrier of the macro cell is classified into the first group, and a radio bearer associated with a component carrier of the small cell is classified into the second group.

10. A discontinuous reception method in a radio communication system in which carrier aggregation is performed by aggregating a component carrier of a macro cell and a component carrier of a small cell, the discontinuous reception method comprising the steps of:
classifying a radio bearer configured in a user terminal into a first group or a second group, the first group including a radio bearer associated with the component carrier of the macro cell, and the second group including a radio bearer associated with the component carrier of the small cell;
transmitting, to the user terminal, a first parameter set to use in discontinuous reception of data via a radio bearer of the first group and a second parameter set to use in discontinuous reception of data via a radio bearer of the second group.
